# EUROPEAN PATENT APPLICATION

(11) **EP 4 269 344 A1**
(43) Date of publication of application: **01.11.2023**
(21) Application number: 21910943.6
(22) Date of filing: 23.12.2021
(51) Int. Cl.: C01B 35/12, H01M 12/06, H01M 12/08, H01M 4/13, H01M 4/40, H01M 4/48, H01M 4/485, H01M 4/505, H01M 4/525, H01M 4/58, H01M 4/587, H01M 4/62, H01B 1/06, H01M 10/052, H01M 10/0562

(54) **LITHIUM ION-CONDUCTIVE SOLID ELECTROLYTE, AND ALL-SOLID-STATE BATTERY**

(30) Priority: 25.12.2020 JP 2020217271
(71) Applicant: Resonac Corporation, Tokyo 105-8518 (JP)
(72) Inventor: LEE, Kunchan, Tokyo 105-8518 (JP); SEI, Ryosuke, Tokyo 105-8518 (JP)
(74) Representative: Strehl Schübel-Hopf & Partner
(86) International application number: PCT/JP2021/047810
(87) International publication number: WO 2022/138804

(57) **Abstract**

Provided is a novel solid electrolyte having excellent lithium ion conductivity.

The lithium ion conductive solid electrolyte of the present invention includes a chalcogenide having a monoclinic crystal structure, wherein
the monoclinic crystal has an α-axis length of 9.690 to 9.711 Å, a b-axis length of 11.520 to 11.531 Å, a c-axis length of 10.680 to 10.695 Å, and an axis angle β in the range of 90.01 to 90.08°. The all-solid-state battery of the present invention includes a positive electrode having a positive electrode active material, a negative electrode having a negative electrode active material, and a solid electrolyte layer between the positive electrode and the negative electrode, wherein the solid electrolyte layer includes the lithium ion conductive solid electrolyte.

## Description

### Technical Field

The present invention relates to a novel solid electrolyte having excellent lithium ion conductivity and an all-solid-state battery.

### Background Art

Rechargeable lithium ion secondary batteries are used in various application fields ranging from portable electronic devices to batteries for electric vehicles. However, commercial lithium ion batteries have critical safety issues associated with the use of flammable organic liquid electrolytes with low thermal stability. In addition, the growth of lithium dendrites in an organic electrolyte causes problems of short circuits in lithium ion batteries.

To solve the above-described problems of organic liquid electrolytes, extensive research has been conducted on solid electrolyte materials. Safety may be significantly improved by replacing the organic liquid electrolytes as non-volatile and thermally stable solid electrolytes. Solid lithium ion electrolytes having high ion conductivity and excellent mechanical strength may be applied to, for example, lithium air batteries, lithium redox flow cells, Li-H₂O₂ semi-fuel cells, and chemical sensors.

Therefore, oxide-based solid electrolytes and sulfide-based solid electrolytes containing lithium have been extensively studied. The sulfide-based solid electrolytes have similar or higher lithium ion conductivity than conventional liquid electrolytes. Meanwhile, the oxide-based solid electrolytes have relatively excellent handling, mechanical properties, chemical properties, and thermal stability.

As an example of a sulfide solid electrolyte, Patent Document 1 (Japanese Patent Laid-Open No. 2020-173992) discloses a sulfide solid electrolyte produced by mixing a raw material composition containing a sulfide component with tetrahydrofuran to obtain a precursor, and then firing the precursor to volatilize the tetrahydrofuran.

In addition, as such an oxide-based solid electrolyte, Non Patent document 1 discloses LiTa₂PO₈, which has a monoclinic crystal structure, exhibits a high lithium ion conductivity (total conductivity (25°C) : 2.5 × 10⁻⁴ S·cm⁻¹).

Patent Literature 2 discloses a fixed electrolyte and an all-solid-state battery that can achieve high ion conductivity even when fired at a low temperature and also discloses that the solid electrolyte includes a lithium ion conductive material having a garnet-type structure, a lithium ion conductive material having a LISICON-type structure, and a compound containing Li and B.

Patent Literature 3 discloses an ion conductive solid electrolyte compound and also discloses that LiTa₂PO₈ in Example 1 is monoclinic crystal and has a crystal structure having an a-axis length of 9.716 Å, a b-axis length of 11.536 Å, a c-axis length of 10.697 Å, and a lattice constant with an axis angle β of 90.04°.

### Prior Art Document

### Non Patent Document

Non Patent Document 1: J. Kim et al., J. Mater. Chem. A, 2018, 6, p22478-22482

### Patent Document

Patent Document 1: JP2020-173992A
Patent Document 2: WO2019/044901
Patent Document 3: WO2020/036290

### Summary of Invention

### Problem to be solved by Invention

However, a problem has been that the sulfide-based solid electrolyte compounds are generally unstable against humidity. In addition, although the oxide-based solid electrolytes have relatively excellent handling, mechanical properties, chemical properties, and thermal stability, they have a relatively low ion conductivity, and therefore further improvement thereof is needed.

Accordingly, an object of the present invention is to provide a novel solid electrolyte having excellent ion conductivity.

### Means for solving Problem

The present inventors have carried out diligent studies and as a result, have found that the above problem can be solved according to the following configuration examples, and have completed the present invention.

The configuration examples of the present invention are as follows.
[1] A lithium ion conductive solid electrolyte, comprising a chalcogenide having a monoclinic crystal structure, wherein
   the monoclinic crystal has an a-axis length of 9.690 to 9.711 Å, a b-axis length of 11.520 to 11.531 Å, a c-axis length of 10.680 to 10.695 Å, and an axis angle β in the range of 90.01 to 90.08°.
[2] The lithium ion conductive solid electrolyte according to [1], wherein the chalcogenide has lithium, tantalum, boron, phosphorus, and oxygen as constituent elements.
[3] The lithium ion conductive solid electrolyte according to [1] or [2], wherein the monoclinic crystal structure is composed of lithium, tantalum, phosphorus, and oxygen as constituent elements.
[4] The lithium ion conductive solid electrolyte according to any one of [1] to [3], wherein the monoclinic crystal has a unit lattice volume of 1193.0 to 1197.9 Å³.
[5] The lithium ion conductive solid electrolyte according to any one of [1] to [4], wherein a content of boron is 0.10 to 5.00 atom%.
[6] The lithium ion conductive solid electrolyte according to any one of [1] to [5], wherein a content of tantalum is 10.00 to 17.00 atom%.
[7] The lithium ion conductive solid electrolyte according to any one of [1] to [6], wherein a content of phosphorus is 5.00 to 8.50 atom%.
[8] The lithium ion conductive solid electrolyte according to any one of [1] to [7], wherein a content of lithium is 5.00 to 20.00 atom%.
[9] The lithium ion conductive solid electrolyte according to any one of [1] to [8], further comprising niobium, wherein a content of niobium is 0.10 to 5.00 atom%.
[10] The lithium ion conductive solid electrolyte according to any one of [1] to [9], wherein a content ratio of the monoclinic crystal is 70.0% or more.
[11] The lithium ion conductive solid electrolyte according to any one of [1] to [10], further comprising silicon, wherein an upper limit of a content of silicon is 0.15 atom%.
[12] The lithium ion conductive solid electrolyte according to any one of [2] to [11], wherein boron is present at a crystal grain boundary.
[13] An all-solid-state battery, comprising:
   a positive electrode containing a positive electrode active material;
   a negative electrode containing a negative electrode active material; and
   a solid electrolyte layer between the positive electrode and the negative electrode, wherein
   the solid electrolyte layer comprises the lithium ion conductive solid electrolyte according to any one of [1] to [12].
[14] The all-solid-state battery according to [13], wherein the positive electrode active material comprises one or more compounds selected from the group consisting of LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and O], LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₂)₃ [where 0 ≤ x8 ≤ 0.8, and M8 is one or more elements selected from the group consisting of Ti and Ge], LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.
[15] The all-solid-state battery according to [13] or [14], wherein the negative electrode active material comprises one or more compounds selected from the group consisting of LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and O], LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], (Li_{3-a9x9+(5-b9)y9}M9ₓ₉)(V_{1-y9}M10_{y9})O₄ [where M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10], LiNb₂O₇, Li₄Ti₅O₁₂, Li₄Ti₅PO₁₂, TiO₂, LiSi, and graphite.
[16] The all-solid-state battery according to any one of [13] to [15], wherein the positive electrode and the negative electrode comprise the lithium ion conductive solid electrolyte according to any one of [1] to [12].

### Effects of Invention

The present invention provides a lithium ion conductive solid electrolyte composed of a monocrystal having a predetermined crystal structure. This solid electrolyte has excellent thermal and chemical stability and high ion conductivity. Such solid electrolytes can be applied, as ion conductive electrolyte materials, to all-solid-state lithium ion batteries, lithium-air (Li-Air) batteries, lithium redox flow (Li-redox flow) batteries, Li-H₂O₂ semi-fuel cells, and chemical sensors, for example.

In addition, the lithium ion conductive solid electrolyte according to the present invention has a simple production method, and for example, an all-solid-state battery can be easily manufactured by laminating the lithium ion conductive solid electrolyte with a positive electrode material or a negative electrode material and sintering them together while suppressing, for example, decomposition and alteration of materials such as the active materials included in the positive electrode active material layer or the negative electrode active material layer. The invention also enables low-temperature firing, which allows for miniaturization and reduces the impact on other base materials.

### Brief Description of Drawings

[Figure 1] Figure 1 shows XRD patterns of the solid electrolytes obtained in Examples 3 and Comparative Example 1.
[Figure 2] Figure 2 shows a secondary electron image and boron mapping image of the solid electrolyte obtained in Example 3 by EPMA.

### The Embodiments of The Present Invention

### <<Lithium ion conductive solid electrolyte>>

The lithium ion conductive solid electrolyte according to one embodiment of the present invention (hereinafter, also referred to as "the present solid electrolyte) includes a chalcogenide, having a monoclinic crystal structure, in which the monoclinic crystal has an a-axis length of 9.690 to 9.711 Å, a b-axis length of 11.520 to 11.531 Å, a c-axis length of 10.680 to 10.695 Å, an axis angle β in the range of 90.01 to 90.08°, and has lithium ion conductivity.

The inclusion of monoclinic crystals with such a crystal structure provides a lithium ion conductive solid electrolyte having superior lithium ion conductivity to conventional lithium ion conductive solid electrolytes.

The crystal structure of the monoclinic crystal, the a-axis length, b-axis length, and c-axis length of the monoclinic crystal, and the axis angle β can be subjected to, for example, morphological observation with SEM-EDX, chemical analysis, and X-ray diffraction to thereby confirm, for example, their composition and crystal structure.

The shape of the solid electrolyte is not particularly limited, and the solid electrolyte may be in the form of a particle, that is, a powder, may be shaped into a shape such as a pellet or sheet, or may be in the form of an amorphous mass, which is appropriately selected according to the form of use.

A chalcogenide in the present specification is a compound of a chalcogen element and an element having lower electronegativity than the chalcogen element, such as an oxide and sulfide. Among them, the compound is not particularly limited as long as they constitute a monoclinic crystal having the above characteristics, but those containing oxygen are preferred in the present invention.

In the present invention, the chalcogenide has a stoichiometric chemical formula of the following general formula (1).

Aₓ(MₐT_{b}G_{c}K_{d})_{y} (1)

In the chemical formula 1, A is an element constituting a cation having an oxidation state of + 1; M is an element constituting a cation having an oxidation state of + 4, + 5, or + 6; T is an element constituting a cation having an oxidation state of + 4, + 5 valence, or 6 valence, which is different from M; G is an element constituting a cation having an oxidation state of + 3 valence; K is a chalcogen element; and x and y are each independent real numbers greater than 0, and x is a real number greater than 0 and 3y or less. a, b, c, and d are appropriately selected so as to be stoichiometric numbers.

Specifically, the A may include one or more elements selected from the group consisting of lithium, sodium and hydrogen; the M may include one or more elements selected from the group consisting of titanium, zirconium, hafnium, vanadium, niobium, tantalum, chromium, molybdenum, tungsten, tin, lead, antimony, and bismuth, where T may include one or more elements selected from the group consisting of silicon, germanium, phosphorus, and arsenic; G may include one or more elements selected from the group consisting of boron, aluminum, and gallium; and K may include one or more elements selected from the group consisting of oxygen and sulfur.

In one preferred embodiment of the present invention, the constituent elements are composed of A, which is lithium, M, which is tantalum, T, which is phosphorus, G, which is boron, and K, which is oxygen, and further include niobium as M.

The present inventors presume the specific structure of the monoclinic crystal as described below. The M is 6-coordinated by K anion to form octahedral unit of MK₆, and T is 4-coordinated by K to form TK₄ tetrahedral unit. Some of the octahedral units of the MK₆ are then coupled to share vertices with two of the TK₄ tetrahedral units to form a trimeric link unit. At this time, in each trimeric link unit, the two TK₄ tetrahedral units are bound so as to share a K ion located at a first vertex among the vertices of the octahedral unit of MK₆ and a second vertex opposite to the first vertex. Note that the details of such a structure are disclosed in the Patent Literature 3.

The A ion is disposed in the space between the octahedral unit of MK₆ and the TK₄ tetrahedral unit. In addition, G is present at crystal grain boundaries as oxides and sulfides and with a partial substitution of T in the TK₄ tetrahedral unit. By containing the above-described constituent elements including G, predetermined a-, b-, and c-axis lengths and the axis angle β are achieved. Such a chalcogenide can be prepared by a production method described later.

A chalcogenide including a specific monoclinic crystal can provide a solid electrolyte having a sufficient ion conductivity even when the firing temperature in manufacturing the solid electrolyte is low (e.g., 900°C or less).

In the present invention, the monoclinic crystal preferably has a unit lattice volume in the range of 1193.0 to 1197.9 Å³. Within this range, the solid electrolyte has a sufficient ion conductivity.

The monoclinic content ratio (= crystal quantity of monoclinic crystal × 100/total crystal quantity of all confirmed crystals) in the solid electrolyte is preferably 70.0% or more, and more preferably 80.0% or more, and the upper limit thereof is not particularly limited but is preferably less than 100.0%, and more preferably 99.5% or less.

When the monoclinic content ratio of the present solid electrolyte is in the above range, the present solid electrolyte tends to be a solid electrolyte having a high total ion conductivity.

Examples of the compound which may be contained in addition to the chalcogenide (1) include LiPO_{g}, Li₃PO₄, TaPO₃, LiTa₃O₃, and LiTaO₃. In some cases, a diffraction peak derived from a raw material is observed. Examples of the raw material to be used include lithium carbonate (Li₂CO₃), tantalum pentoxide (Ta₂O₅), and boric acid.

The monoclinic content ratio in the solid electrolyte can be calculated, for example by carrying out Rietveld analysis of an XRD pattern of the solid electrolyte using the known analysis software RIETAN-FP (available on creator; Fujio Izumi's website "RIETAN-FP·VENUS system distribution file" (http://fujioizumi.verse.jp/download/download.html)).

In a preferred embodiment of the solid electrolyte of the present invention, the chalcogenide has lithium, tantalum, boron, phosphorus, and oxygen as constituent elements. The monoclinic crystal preferably contains lithium, tantalum, phosphorus, and oxygen as constituent elements. Boron is preferably included in the crystal grain boundaries. When boron is included in the crystal grain boundaries, the following effects can be obtained: the monoclinic shape can be easily taken, the total ion conductivity can be increased, and the firing temperature can be reduced.

In this case, the content of boron is preferably 0.10 atom% or more, and more preferably 0.50 atom% or more, from the viewpoint of, for example, being able to further lower the sintering temperature when obtaining a solid electrolyte having a sufficient ion conductivity. In addition, the upper limit thereof is preferably 5.00 atom% or less, and more preferably 3.00 atom% or less.

The content of tantalum is preferably 10.00 atom% or more, and more preferably 11.00 atom% or more, from the viewpoint of, for example, being a solid electrolyte having a higher lithium ion conductivity. In addition, the upper limit thereof is preferably 17.00 atom% or less and more preferably 16.00 atom% or less.

The content of the phosphorus is preferably 5.00 atom% or more, and more preferably 6.00 atom% or more, from the viewpoint of, for example, being a solid electrolyte having a higher lithium ion conductivity. The upper limit thereof is preferably 8.50 atom% or less, and more preferably 8.00 atom% or less.

The content of the lithium element is preferably 5.00 atom% or more, and more preferably 6.00 atom% or more, from the viewpoint of, for example, being a solid electrolyte having a higher lithium ion conductivity. The upper limit thereof is preferably 20.00 atom% or less, and more preferably 15.00 atom% or less.

A preferred embodiment include niobium together with lithium, tantalum, boron, phosphorus, and oxygen. When niobium is included, the content of niobium is preferably 0.10 atomic% or more, and more preferably 0.50 atomic% or more, from the viewpoint of, for example, being able to further lower the firing temperature when obtaining a sintered body having a sufficient ion conductivity. The upper limit thereof is 5.00 atomic% or less, more preferably 3.00 atomic% or less, further preferably 2.00 atomic% or less, and even more preferably 1.60 atomic% or less.

In the present invention, when the chalcogenide contains silicon, the upper limit of its content is preferably 0.15 atomic%. When the content of silicon exceeds the upper limit, a solid electrolyte having sufficient ion conductivity may not be obtained.

Note that the content of each element can be determined by a known method such as a high frequency inductively coupled plasma (ICP) emission spectrometer or Auger electron spectroscopy (AES).

The chalcogenide can be produced by firing the raw materials mixed so as to have a stoichiometric ratio of the formula (1).

For example, raw materials are pulverized and mixed by, for example, a ball mill or bead mill, and then subjected to firing treatment. At this time, the materials may be compressed into a predetermined shape and then subjected to firing or sintering treatment.

The obtained fired product may also be mixed with various additives as described below as necessary, pulverized, then shaped by compression forming such as press forming, and fired or sintered to obtain a solid electrolyte.

As the raw material of A in the above formula (1), salts such as carbonate, nitrate, and borate of A can be used; as the raw material of M, compounds such as oxide and salt of M can be used; as the raw material of T, oxide and salt of T can be used; and as the raw material of G, oxide and salt of C can be used. The oxides also include hydroxides.

When the chalcogenide includes lithium, tantalum, boron, phosphorus, and oxygen as constituent elements, examples of the raw materials for lithium include lithium carbonate, lithium oxide, lithium nitrate, lithium hydroxide, lithium acetate, and hydrates thereof. Among these, lithium carbonate, lithium hydroxide, and lithium acetate are preferable in that these are easily decomposed and reacted. Alternatively, a compound containing, for example, sodium, may be used as a raw material, and sodium and lithium may be ion-exchanged after firing.

Tantalum pentoxide and tantalum nitrate can be used as tantalum raw materials.

Phosphate is preferred as phosphorus raw materials, and examples of the phosphate include diammonium hydrogen phosphate, monoammonium dihydrogen phosphate, and ammonium phosphate in that these are easily decomposed and reacted.

Boric acid and boron oxide can also be used as raw materials for boron.

Further, as the raw material, a salt containing two or more elements constituting the solid electrolyte may be used, for example, LiPO₃, LiH₂PO₄, LiBO₂, LiB₃O₅, Li₂B₄O₇, Li₃B₁₁O₁₈, Li₃BO₃, Li₃B₇O₁₂, Li₄B₂O₅, Li₆B₄O₉, Li₃₋ₓB₂₋ₓCₓO₃ (0 <x <1), or Li₄₋ₓB₂₋ₓCₓO₅ (0 <x <2) can also be used.

Examples of the compound including a niobium atom include oxides and salts, and for example, Nb₂O₃, LiNbO₃, LiNb₃O₈, and NbPO₅ can be used.

As each of the raw materials, one may be used, or two or more may be used.

The firing is performed by heating at a temperature of 500 to 1200°C, preferably 700 to 1000°C, for about 1 to 16 hours, depending on the firing time. As a result, impurity components or other components contained in the raw materials are volatilized and removed, and the desired electrolyte is obtained.

Sintering of compression-formed body involves heating in the temperature range of 600°C to 1200°C for about 1 to 96 hours.

The firing and sintering described above may be carried out in the atmosphere, but may also be carried out under an atmosphere of nitrogen gas and/or argon gas with a controlled oxygen gas content in the range of 0 to 20% by volume, or under an atmosphere of a reducing gas such as a nitrogen-hydrogen mixed gas containing a reducing gas such as hydrogen gas. As the reducing gas other than hydrogen gas, for example, ammonia gas, or carbon monoxide gas may be used.

### <<All-solid-state battery>>

The all-solid-state battery of the present invention includes a positive electrode having a positive electrode active material, a negative electrode having a negative electrode active material, and a solid electrolyte layer between the positive electrode and the negative electrode, wherein the solid electrolyte layer includes the lithium ion conductive solid electrolyte described above.

### <Solid electrolyte layer>

The solid electrolyte may be used alone or in combination of two or more. When two or more solid electrolytes are used, two or more solid electrolytes may be mixed, or two or more layers of each solid electrolyte may be formed to form a multilayer structure.

The solid electrolyte layer is not particularly limited as long as the solid electrolyte according to the present invention is included, and the content thereof is, for example, 50 mass% or more, may be in the range of 60 mass% or more and 100 mass% or less, may be in the range of 70 mass% or more and 100 mass% or less, or may be 100 mass%. Preferably, it is composed of the solid electrolyte described above.

A preferred embodiment is that the solid electrolyte described above is contained in the positive electrode active material layer and the negative electrode active material layer. By doing so, it is possible to improve the ion conductivity by increasing the adhesion between the solid electrolyte layer and the positive electrode active material layer and between the solid electrolyte layer and the negative electrode active material layer, which is preferred.

The solid electrolyte layer may also contain a binder from the viewpoint of exhibiting, for example, plasticity. Examples of such a binder include acrylonitrile-butadiene rubber (ABR), butadiene rubber (BR), polyvinylidene fluoride (PVdF), and styrene-butadiene rubber (SBR). However, the amount of the binder contained in the solid electrolyte layer is desirably 5 mass% or less from the viewpoint of, for example, preventing excessive aggregation of the solid electrolyte and enabling formation of a solid electrolyte layer having a uniformly dispersed solid electrolyte in order to easily achieve high output.

The thickness of the solid electrolyte layer is not particularly limited, and is usually 0.1 um or more and 1 mm or less.

Examples of the method of forming the solid electrolyte layer include a method of pressure-forming a powder of a solid electrolyte material containing a solid electrolyte and other components as necessary, as described above. When the powder of the solid electrolyte material is pressure-formed, it is usually sufficient to apply a press pressure of approximately 1 MPa or more and 600 MPa or less.

The all-solid-state battery according to one embodiment of the present invention (hereinafter, also referred to as "the present battery") includes a positive electrode having a positive electrode active material, a negative electrode having a negative electrode active material, and a solid electrolyte layer between the positive electrode and the negative electrode, wherein the solid electrolyte layer includes the present solid electrolyte.

The battery may be a primary battery or a secondary battery, and is preferably a secondary battery and more preferably a lithium ion secondary battery, from the viewpoint of, for example, exerting the advantageous effects of the present invention more.

The structure of the battery is not particularly limited as long as the present battery include a positive electrode, a negative electrode, and a solid electrolyte layer between the positive electrode and the negative electrode, and may be a so-called thin film type, laminated type, or bulk type.

### <Positive electrode>

The positive electrode is not particularly limited as long as the positive electrode has a positive electrode active material, and preferable examples thereof include a positive electrode having a positive electrode current collector and a positive electrode active material layer.

### [Positive electrode active material layer]

The positive electrode active material layer may include, for example, a solid electrolyte, a conductive material, and a binder as optional components.

The type of the positive electrode active material is not particularly limited, and any material that can be used as an active material of an all-solid-state battery can be adopted. The positive electrode active material may include a lithium element or may not include a lithium element.

The thickness of the positive electrode active material layer may be appropriately selected according to the structure of the battery to be formed. Although it is not particularly limited, the thickness may be 30 nm or more and 5000 nm or less.

### • Positive electrode active material

The positive electrode active material preferably includes one or more compounds selected from the group consisting of LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti, Li₂M6P₂O₇ [where M6 is one or more elements selected from the group consisting of Fe, Mn, Co, Ni, Al, Ti, and V, or two elements V and O], LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₄)₃ [where 0 ≤ x8 ≤ 0.8, and M8 is one or more elements selected from the group consisting of Ti and Ge], LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.

A coating layer containing a Li ion conductive oxide may be formed on the surface of the positive electrode active material. This is because the reaction between the positive electrode active material and the solid electrolyte can be suppressed.

Examples of the Li ion conductive oxide include LiNbO₃, Li₄Ti₅O₁₂, and Li₃PO₄. The thickness of the coating layer is, for example, 0.1 nm or more, and may be 1 nm or more. Meanwhile, the thickness of the coating layer is, for example, 100 nm or less, and may be 20 nm or less. The coverage of the coating layer on the surface of the positive electrode active material is, for example, 70% or more, and may be 90% or more.

The content of the solid electrolyte in the positive electrode layer is not particularly limited, but may be, for example, in the range of 1 mass% to 80 mass%, where 100 mass% is the total mass of the positive electrode layer.

### • Solid electrolyte

As the solid electrolyte included in the positive electrode active material layer, the solid electrolyte of the present invention may be used, and examples thereof include oxide-based solid electrolytes, sulfide-based solid electrolytes, which will be described later, other than the solid electrolyte of the present invention.

Examples of the sulfide-based solid electrolyte include Li₂S-P₂S₅, Li₂S-SiS₂, LiX-Li₂S-SiS₂, LiX-Li₂S-P₂S₅, LiX-Li₂O-Li₂S-P₂S₅, LiX-Li₂S-P₂O₅, LiX-Li₃PO₄-P₂S₅, and Li₃PS₄. "X" denotes a halogen element.

Examples of the oxide-based solid electrolyte include Li_{6.25}La₃Zr₂Al_{0.25}O₁₂, Li₃PO₄, and Li₃₊ₓPO₄₋ₓNₓ (1 ≤ x ≤ 3) .

The solid electrolyte is preferably in the form of a particle from the viewpoint of ease of handling. The volume-average particle size (D50) of the particles of the solid electrolytes is not particularly limited, but the lower limit thereof is preferably 0.5 um or more, and the upper limit thereof is preferably 2 um or less.

As the conductive material, a known material can be used, and examples thereof include a carbon material and metal particles. Examples of the carbon material include at least one selected from the group consisting of carbon blacks such as acetylene black and furnace black, carbon nanotubes, and carbon nanofibers, among which at least one selected from the group consisting of carbon nanotubes and the carbon nanofibers is preferred from the viewpoint of electron conduction. The carbon nanotubes and the carbon nanofibers may be vapor grown carbon fibers (VGCF). Examples of the metal particles include particles of, for example, Ni, Cu, Fe, and SUS. The content of the conductive material in the positive electrode active material layer is not particularly limited.

Examples of the binder include acrylonitrile-butadiene rubber (ABR), butadiene rubber (BR), polyvinylidene fluoride (PVdF), and styrene-butadiene rubber (SBR). The content of the binder in the positive electrode active material layer is not particularly limited.

The thickness of the positive electrode active material layer is not particularly limited.

The positive electrode active material layer can be formed by a conventionally known method.

For example, a positive electrode active material and, if necessary, other components are put into a solvent and stirred to manufacture a slurry for a positive electrode active material layer, and the slurry for a positive electrode active material layer is coated on one surface of a support such as a positive electrode current collector and dried to obtain a positive electrode active material layer.

Examples of the solvent include butyl acetate, butyl butyrate, heptane, and N-methyl-2-pyrrolidone.

The method of applying the slurry for a positive electrode active material layer on one surface of a support such as a positive electrode current collector is not particularly limited, and examples thereof include a doctor blade method, a metal mask printing method, an electrostatic coating method, a dip coating method, a spray coating method, a roll coating method, a gravure coating method, and a screen printing method.

The support may be suitably selected from those having self-supporting properties, and is not particularly limited. For example, a metal foil such as Cu or Al may be used.

As another method of forming the positive electrode active material layer, the positive electrode active material layer may be formed by pressure-forming a powder of a positive electrode mixture containing the positive electrode active material and, if necessary, other components. When the powder of the positive electrode mixture is pressure-formed, a press pressure of approximately 1 MPa or more and 600 MPa or less is usually applied.

The pressing method is not particularly limited, and examples thereof include a method of applying pressure using, for example, a flat plate press and a roll press.

As the positive electrode current collector, a known metal available as a current collector of an all-solid-state battery can be used. Examples of such a metal include a metal material containing one or more elements selected from the group consisting of Cu, Ni, Al, V, Au, Pt, Mg, Fe, Ti, Co, Cr, Zn, Ge, and In.

The form of the positive electrode current collector is not particularly limited, and examples thereof include various kinds of forms such as a foil form and a mesh form.

The shape of the positive electrode as a whole is not particularly limited and may be a sheet shape. In this case, the overall thickness of the positive electrode is not particularly limited and may be appropriately determined according to the desired performance.

The content of the positive electrode active material in the positive electrode active material layer is preferably 20 to 80% by volume and more preferably 30 to 70% by volume.

When the content of the positive electrode active material is in the above range, the positive electrode active material functions favorably, and a battery having a high energy density tends to be able to be easily obtained.

### • Additives

Preferable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, the same compounds as for the compound (b), a compound including a niobium atom, a compound including a bismuth atom, and a compound including a silicon atom are preferable.

As each additive used for the positive electrode active material layer, one may be used or two or more may be used.

### • Positive electrode current collector

The positive electrode current collector is not particularly limited as long as the material thereof is one that conducts an electron without causing an electrochemical reaction. Examples of the material of the positive electrode current collector include a simple substance of a metal such as copper, aluminum, or iron, an alloy including any of these metals, and an electrically conductive metal oxide such as antimony-doped tin oxide (ATO) or tin-doped indium oxide (ITO).

As the positive electrode current collector, a current collector having a conductor and a conductive adhesive layer formed on the surface can also be used.

### <Negative electrode>

The negative electrode is not particularly limited as long as the negative electrode contains a negative electrode active material, and preferable examples thereof include a negative electrode having a negative electrode current collector and a negative electrode active material layer.

### [Negative electrode active material layer]

The negative electrode active material layer is not particularly limited as long as the negative electrode active material layer includes a negative electrode active material, and the negative electrode active material layer preferably includes a negative electrode active material and a solid electrolyte and may further include an additive such as an electrically conductive aid or a sintering aid.

The thickness of the negative electrode active material layer is not particularly limited and may be 30 nm or more and 5000 nm or less.

### • Negative electrode active material

As the negative electrode active material, for example, a known material can be used, and specifically, the negative electrode active material preferably contains one or more compounds selected from the group consisting of LiM3PO₄ [where M3 is one or more elements selected from the group consisting of Mn, Co, Ni, Fe, Al, Ti, and V, or two elements V and O], LiM5VO₄ [where M5 is one or more elements selected from the group consisting of Fe, Mn, Co, Ni, Al, and Ti], Li₂M6P₂O₇ [where M6 is one or more elements selected from the group consisting of Fe, Mn, Co, Ni, Al, Ti, and V, or two elements V and O, LiVP₂O₇, Liₓ₇V_{y7}M7_{z7} [where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr], Li₁₊ₓ₈Alₓ₈M8₂₋ₓ₈(PO₂)₃ [where 0 ≤ x8 ≤ 0.8, and M8 is one or more elements selected from the group consisting of Ti and Ge], (Li_{3-a9x9+(5-b9)y9}M9ₓ₉)(V_{1-y9}M10_{y9})O₄ [where M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10], LiNb₂O₇, Li₄Ti₅O₁₂, Li₄Ti₅PO₁₂, TiO₂, LiSi, and graphite.

The content of the negative electrode active material in the negative electrode active material layer is preferably 20 to 80% by volume and more preferably 30 to 70% by volume.

When the content of the negative electrode active material is in the above range, the negative electrode active material functions favorably, and a battery having a high energy density tends to be able to be easily obtained.

The negative electrode active material layer may include a solid electrolyte. The solid electrolyte can be any known solid electrolyte, including the solid electrolyte of the present invention.

The negative electrode current collector may be made of a material that is not alloyed with Li, and examples thereof include SUS, copper, and nickel. Examples of the form of the negative electrode current collector include a foil form and a plate form. The planar shape of the negative electrode current collector is not particularly limited, and examples thereof include a circular shape, an elliptical shape, a rectangular shape, and an arbitrary polygonal shape.
Further, the thickness of the negative electrode current collector varies depending on the shape but is, for example, in the range of 1 µm to 50 pm, and may be in the range of 5 µm to 20 µm.

The negative electrode active material layer can be formed by a conventionally known method.

The all-solid-state battery includes an outer casing that houses the positive electrode, negative electrode, and solid electrolyte layer, as needed.

The material for the outer casing is not particularly limited as long as it is stable in the electrolyte, and examples thereof include resins such as polypropylene, polyethylene, and acrylic resin.

The all-solid-state battery may be an all-solid-state lithium secondary battery.

Examples of the form of the all-solid-state battery include a coin form, a laminate form, a cylindrical form, and a square form.

The method for producing the all-solid-state battery is not particularly limited, and each of the above-mentioned layers may be laminated and, if necessary, subjected to pressure compression, for example.

### Examples

Hereinafter, the present invention will be specifically described based on Examples. The present invention is not limited to these Examples.

### [Example 1]

Lithium carbonate (Li₂CO₃) (manufactured by Merck KGaA, Sigma-Aldrich, purity of 99.0% or more), tantalum pentoxide (Ta₂O₅) (manufactured by FUJIFILM Wako Pure Chemical Corporation, purity of 99.9%), boric acid (H₃BO₃) (manufactured by FUJIFILM Wako Pure Chemical Corporation, purity of 99.5% or more), and diammonium hydrogen phosphate ((NH₄)₂HPO₄) (manufactured by Merck KGaA, Sigma-Aldrich, purity of 98% or more) were weighed such that the ratio of the numbers of atoms of lithium, tantalum, boron, and phosphorus (Li:Ta:B:P) satisfied the stoichiometric formula shown in Table 1. Further, in consideration of lithium atoms flowing out of the system in the firing step, lithium carbonate was weighed so as to be 1.05 times the amount of lithium atoms in Table 1, and diammonium hydrogen phosphate was weighed so as to be 1.06 times the amount of phosphorus atoms in Table 1 in order to suppress the formation of byproducts in the firing step. An appropriate amount of toluene was added to each raw material powder thereof weighed, and these were pulverized and mixed for 2 hours using a zirconia ball mill (zirconia ball: diameter of 5 mm) to obtain a primary mixture.

The obtained primary mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at the same temperature for 4 hours to obtain a primary fired product.

An appropriate amount of toluene was added to the obtained primary fired product, and this was pulverized and mixed for 2 hours using a zirconia ball mill (zirconia ball: diameter of 1 mm) to obtain a secondary mixture.

Using a tableting machine, a pressure of 40 MPa was applied with a hydraulic press to the obtained secondary mixture to form a disk-shaped tableted body having a diameter of 10 mm and a thickness of 1 mm, and next, a pressure of 300 MPa was applied to the disk-shaped tableted body by CIP (cold isostatic pressing) to manufacture a pellet.

The obtained pellet was placed in an alumina boat, and the temperature thereof was raised to 850°C under a condition of a temperature rise rate of 10°C/min in an atmosphere of air (flow rate: 100 mL/min) using a rotary firing furnace (manufactured by Motoyama Co., Ltd.), and the pellet was fired at the above temperature for 96 hours to obtain a sintered body.

The temperature of the obtained sintered body was lowered to room temperature, then taken out from the rotary firing furnace, transferred into a dehumidified nitrogen gas atmosphere, and stored to obtain a solid electrolyte.

### [Examples 2 to 4]

Solid electrolytes were manufactured in the same manner as in Example 1 except that the mixing ratios of the raw materials were changed such that the ratios of the numbers of atoms of lithium, tantalum, boron, and phosphorus satisfied the stoichiometric formulas shown in Table 1.

### [Examples 5 and 6]

A solid electrolyte was manufactured in the same manner as in Example 1 except that in Example 1, niobium pentoxide (Nb₂O₅) (manufactured by FUJIFILM Wako Pure Chemical Corporation, purity of 99.9%) was further used, and each raw material powder was used such that the ratio of the numbers of atoms of lithium, tantalum, niobium, boron, and phosphorus (Li:Ta:Nb:B:P) satisfied the stoichiometric formula shown in Table 1.

### [Example 7]

A solid electrolyte was manufactured in the same manner as in Example 1 except that in Example 1, silicon dioxide (SiO₂) (manufactured by FUJIFILM Wako Pure Chemical Corporation, purity of 99.9%) was further used, and each raw material powder was used such that the ratio of the numbers of atoms of lithium, tantalum, boron, phosphorus, and silicon (Li:Ta:B:P:Si) satisfied the stoichiometric formula shown in Table 1.

### [Comparative Example 1]

A solid electrolyte was manufactured in the same manner as in Example 1 except that lithium carbonate (Li₂CO₃) (manufactured by Merck KGaA, Sigma-Aldrich, purity of 99.0% or more), tantalum pentoxide (Ta₂O₅) (manufactured by FUJIFILM Wako Pure Chemical Corporation, purity of 99.9%), and diammonium hydrogen phosphate ((NH₄)₂HPO₄) (manufactured by Merck KGaA, Sigma-Aldrich, purity of 98% or more) were used, and each raw material powder was used such that the ratio of the numbers of atoms of lithium, tantalum, and phosphorus (Li:Ta:P) satisfied the stoichiometric formula shown in Table 1.

### [Comparative Example 2]

A solid electrolyte was manufactured in the same manner as in Comparative Example 1 except that silicon dioxide (SiO₂) (manufactured by FUJIFILM Wako Pure Chemical Corporation, purity of 99.9%) was further used, and each raw material powder was used such that the ratio of the numbers of atoms of lithium, tantalum, phosphorus, and silicon (Li:Ta:P:Si) satisfied the stoichiometric formula shown in Table 1.

### [Comparative Example 3]

A solid electrolyte was manufactured in the same manner as in Comparative Example 1 except that niobium pentoxide (Nb₂O₅) (manufactured by FUJIFILM Wako Pure Chemical Corporation, purity of 99.9%) was further used, and each raw material powder was used such that the ratio of the numbers of atoms of lithium, tantalum, niobium, and phosphorus (Li:Ta:Nb:P) satisfied the stoichiometric formula shown in Table 1.

### [Comparative Example 4]

Lithium carbonate (Li₂CO₃) (manufactured by Merck KGaA, Sigma-Aldrich, purity of 99.0% or more), tantalum pentoxide (Ta₂O₅) (manufactured by FUJIFILM Wako Pure Chemical Corporation, purity of 99.9%), and diammonium hydrogen phosphate ((NH₄)₂HPO₄) (manufactured by Merck KGaA, Sigma-Aldrich, purity of 98% or more) were weighed such that the ratio of the numbers of atoms of lithium, tantalum, and phosphorus (Li:Ta:P) satisfied 1.05:2.00:1.06. An appropriate amount of toluene was added to each raw material powder thereof weighed, and these were pulverized and mixed for 2 hours using a zirconia ball mill (zirconia ball: diameter of 5 mm) to obtain a primary mixture.

The obtained primary mixture was placed in an alumina boat, and the temperature thereof was raised to 1000°C under a condition of a temperature rise rate of 10°C/min in an atmosphere of air (flow rate: 100 mL/min) using a rotary firing furnace (manufactured by Motoyama Co., Ltd.), and the mixture was fired at the same temperature for 4 hours to obtain a primary fired product.

The obtained primary fired product and Li₄b₂O₅ obtained by a conventionally known production method were weighed such that the molar ratio was 0.85:0.15. Each powder thereof weighed were pulverized and mixed using an agate mortar for 30 minutes to obtain a secondary mixture.

Using a tableting machine, a pressure of 40 MPa was applied with a hydraulic press to the obtained secondary mixture to form a disk-shaped tableted body having a diameter of 10 mm and a thickness of 1 mm, and next, a pressure of 300 MPa was applied to the disk-shaped tableted body by CIP (cold isostatic pressing) to manufacture a pellet.

The obtained pellet was placed in an alumina boat, and the temperature thereof was raised to 850°C under a condition of a temperature rise rate of 10°C/min in an atmosphere of air (flow rate: 100 mL/min) using a rotary firing furnace (manufactured by Motoyama Co., Ltd.), and the pellet was fired at the above temperature for 96 hours to obtain a sintered body.

The temperature of the obtained sintered body was lowered to room temperature, then taken out from the rotary firing furnace, transferred into a dehumidified nitrogen gas atmosphere, and stored to obtain a solid electrolyte.

### <X-ray diffraction (XRD)>

The obtained solid electrolyte was disintegrated using an agate mortar for 30 minutes to obtain a powder for XRD measurement.

Using a powder X-ray diffraction analyzer, PANalytical MPD (manufactured by Spectris Co., Ltd.), X-ray diffraction measurement of the obtained powder for XRD measurement (Cu-Kα radiation (output: 45 kV, 40 mA), diffraction angle 20 = range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) was carried out to obtain an X-ray diffraction (XRD) pattern. The crystal structures included were confirmed by carrying out Rietveld analysis of the obtained XRD pattern using the known analysis software RIETAN-FP (available on creator; Fujio Izumi's website "RIETAN-FP·VENUS system distribution file" (http://fujioizumi.verse.jp/download/download.html)) to calculate the a, b, and c axis lengths, axis angle β, unit lattice volume V, and content ratio of monoclinic crystals. The calculated a-, b-, and c-axis length, axis angle β, and unit lattice volume V, and the content ratio of the monoclinic crystal are summarized in Table 1.

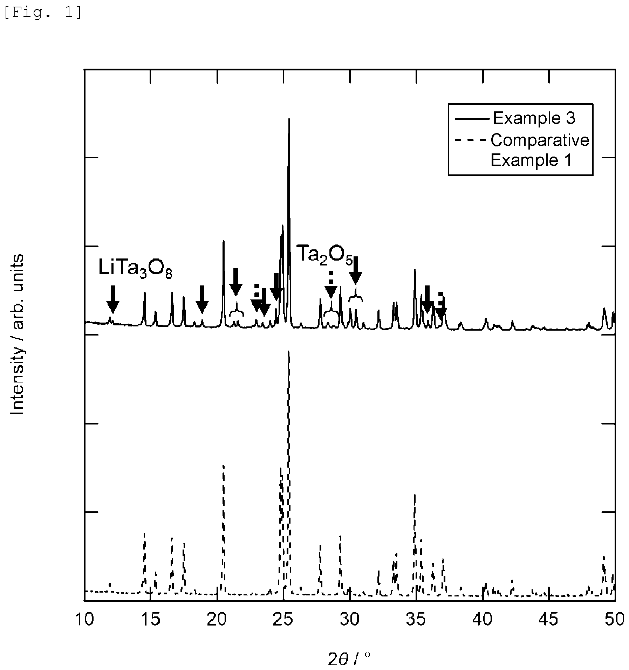

The XRD patterns of the solid electrolytes obtained in Example 3 and Comparative Example 1 are shown in Figure 1.

From Figure 1, in Comparative Example 1, only a peak derived from the monoclinic crystal structure of LiTa₂PO₈ was observed. For the solid electrolyte obtained in Example 3, a peak derived from LiTa₃O₈ (ICSD code: 493) and a peak derived from Ta₂O₅ (ICSD code: 66366) were observed in addition to a peak derived from the LiTa₂PO₈ structure.

In each of the XRD patterns of the solid electrolytes obtained in Examples, the same diffraction pattern as in the XRD pattern of the solid electrolyte of Comparative Example 1 was each confirmed, and the a-, b-, and c-axis lengths of the monoclinic crystal and the unit lattice volume V calculated by Rietveld analysis were smaller than those of Comparative Examples. In the present solid electrolyte, it is considered that boron atoms are contained in a lattice of a monoclinic crystal structure composed of lithium, tantalum, phosphorus, and oxygen as constituent elements.

In each XRD pattern of the solid electrolyte obtained in Comparative Example 4, the same diffraction pattern as in the XRD pattern of the solid electrolyte of Comparative Example 1 was each confirmed, and the a-, b-, and c-axis lengths of the monoclinic crystal and the unit lattice volume V calculated by Rietveld analysis were at the same level as in Comparative Example 1. In the present solid electrolyte, it is considered that boron atoms are not contained in a lattice of a monoclinic crystal structure composed of lithium, tantalum, phosphorus, and oxygen as constituent elements.

### <Electron Probe Micro Analyzer (EPMA)>

The obtained solid electrolyte was cut and sectioned by an ion milling method (CP polishing, acceleration voltage: 6 kV, polishing time: 8 hours).

Using an EPMA equipment JMX-8530F (manufactured by JEOL Ltd.), EPMA measurement (acceleration voltage: 10 kV, illumination current: 1 × 10⁻⁷ A) of the cross section of the obtained solid electrolyte was carried out to thereby obtain a secondary electron image and a boron mapping image.

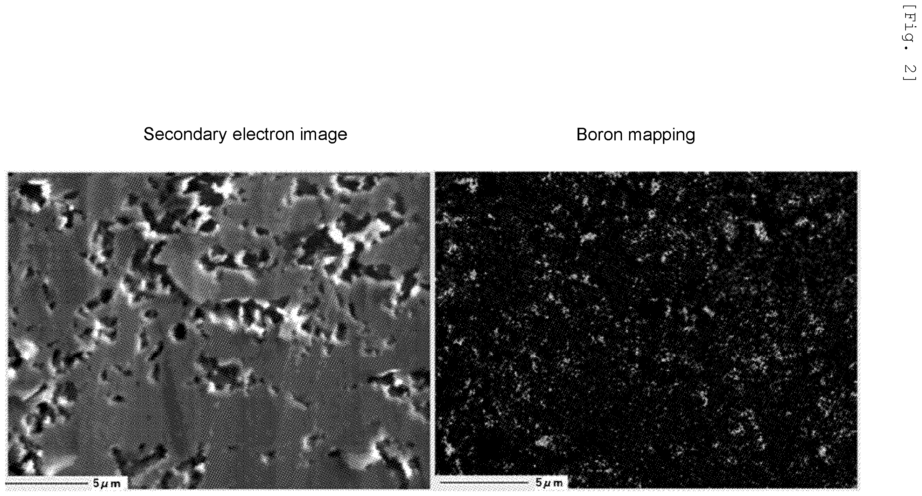

The secondary electron image and boron mapping image of the solid electrolyte obtained in Example 3 by EPMA are shown in Figure 2. In the secondary electron image, a portion corresponding to a gray intermediate color is a monoclinic crystal, and black and white portions indicate crystal grain boundaries. In the boron mapping, a portion having a high content of boron atoms is shown in white, and a portion having a low content of boron atoms is shown in black.

From Figure 2, it can be seen that many boron atoms are present at crystal grain boundaries.

### <Total conductivity>

A gold layer was formed on each of both sides of the obtained solid electrolyte using a sputtering machine to obtain a measurement pellet for ion conductivity evaluation.

The obtained measurement pellet was kept in a constant temperature bath at 25°C for 2 hours before measurement. Next, AC impedance measurement was carried out at 25°C in a frequency range of 1 Hz to 10 MHz under a condition of an amplitude of 25 mV using an impedance analyzer (manufactured by Solartron Analytical, model number: 1260A). The obtained impedance spectrum was fitted with an equivalent circuit using the equivalent circuit analysis software ZView included with the analyzer to determine the lithium ion conductivity within a crystal grain and the lithium ion conductivity at a crystal grain boundary, and these were added up to calculate the total ion conductivity. Results are shown together in Table 1.

### [Table 1]

**Table 1**

| | Stoichiometric formula | Ratio of numbers of atoms (atom%) | | | | | |
|---|---|---|---|---|---|---|---|
| | | Li | B | Si | P | Nb | Ta |
| Example 1 | Li_{1.15}Ta_{1.90}B_{0.10}P_{0.95}O_{7.85} | 9.62 | 0.84 | 0.00 | 7.95 | 0.00 | 15.90 |
| Example 2 | Li_{1.30}Ta_{1.80}B_{0.20}P_{0.90}O_{7.70} | 10.92 | 1.68 | 0.00 | 7.56 | 0.00 | 15.13 |
| Example 3 | Li_{1.45}Ta_{1.70}B_{0.30}P_{0.85}O_{7.55} | 12.24 | 2.53 | 0.00 | 7.17 | 0.00 | 14.35 |
| Example 4 | Li_{0.70}Ta_{1.40}B_{0.30}P_{0.70}O_{7.10} | 6.67 | 2.86 | 0.00 | 6.67 | 0.00 | 13.33 |
| Example 5 | Li_{1.15}Ta_{1.71}Nb_{0.19}B_{0.10}P_{0.95}O_{7.85} | 9.62 | 0.84 | 0.00 | 7.95 | 1.59 | 14.31 |
| Example 6 | Li_{1.45}Ta_{1.53}Nb_{0.17}B_{0.30}P_{0.85}O_{7.55} | 12.24 | 2.53 | 0.00 | 7.17 | 1.43 | 12.91 |
| Example 7 | Li_{1.17}Ta_{1.90}B_{0.10}P_{0.94}Si_{0.01}O_{7.85} | 9.77 | 0.84 | 0.08 | 7.86 | 0.00 | 15.87 |
| Comparative Example 1 | Li_{1.00}Ta_{2.00}P_{1.00}O_{8.00} | 8.33 | 0.00 | 0.00 | 8.33 | 0.00 | 16.67 |
| Comparative Example 2 | Li_{1.20}Ta_{2.00}P_{0.80}Si_{0.20}O_{8.00} | 9.84 | 0.00 | 1.64 | 6.56 | 0.00 | 16.39 |
| Comparative Example 3 | Li_{1.00}Ta_{1.80}Nb_{0.20}P_{1.00}O_{8.00} | 8.33 | 0.00 | 0.00 | 8.33 | 1.67 | 15.00 |
| Comparative Example 4 | Li_{1.45}Ta_{1.70}B_{0.30}P_{0.85}O_{7.55} | 12.24 | 2.53 | 0.00 | 7.17 | 0.00 | 14.35 |

| | Monoclinic content ratio (%) | Axis length | | | Axis angle β(°) | Lattice volume V(Å³) | Total ion conductivity (S/cm) |
|---|---|---|---|---|---|---|---|
| | | a(Å) | b(Å) | c(Å) | | | |
| Example 1 | 93.8 | 9.705 | 11.528 | 10.695 | 90.02 | 1196.5 | 1.25×10⁻³ |
| Example 2 | 87.9 | 9.707 | 11.530 | 10.695 | 90.01 | 1197.0 | 1.10×10⁻³ |
| Example 3 | 83.5 | 9.697 | 11.522 | 10.684 | 90.05 | 1193.7 | 7.59×10⁻⁴ |
| Example 4 | 96.0 | 9.704 | 11.525 | 10.690 | 90.03 | 1195.5 | 7.99×10⁻⁴ |
| Example 5 | 99.1 | 9.710 | 11.529 | 10.691 | 90.04 | 1196.8 | 1.14×10⁻³ |
| Example 6 | 77.2 | 9.708 | 11.529 | 10.690 | 90.04 | 1196.5 | 4.78×10⁻⁴ |
| Example 7 | 99.0 | 9.705 | 11.530 | 10.695 | 90.03 | 1196.8 | 5.66×10⁻⁴ |
| Comparative Example 1 | 100 | 9.713 | 11.532 | 10.696 | 90.04 | 1198.0 | 1.87×10⁻⁴ |
| Comparative Example 2 | 100 | 9.724 | 11.538 | 10.682 | 90.09 | 1198.5 | 2.35×10⁻⁴ |
| Comparative Example 3 | 100 | 9.715 | 11.532 | 10.696 | 90.01 | 1198.3 | 4.62×10⁻⁴ |
| Comparative Example 4 | 80.5 | 9.713 | 11.533 | 10.701 | 90.04 | 1198.7 | 2.31×10⁻⁶ |

From Table 1, it can be seen that the lithium ion conductive solid electrolyte of the present invention has excellent ion conductivity.

## Claims

1. A lithium ion conductive solid electrolyte, comprising a chalcogenide having a monoclinic crystal structure, wherein
the monoclinic crystal has an a-axis length of 9.690 to 9.711 Å, a b-axis length of 11.520 to 11.531 Å, a c-axis length of 10.680 to 10.695 Å, and an axis angle β in a range of 90.01 to 90.08°.

2. The lithium ion conductive solid electrolyte according to claim 1, wherein the chalcogenide has lithium, tantalum, boron, phosphorus, and oxygen as constituent elements.

3. The lithium ion conductive solid electrolyte according to claim 1 or 2, wherein the monoclinic crystal structure is composed of lithium, tantalum, phosphorus, and oxygen as constituent elements.

4. The lithium ion conductive solid electrolyte according to any one of claims 1 to 3, wherein the monoclinic crystal has a unit lattice volume of 1193.0 to 1197.9 Å³.

5. The lithium ion conductive solid electrolyte according to any one of claims 2 to 4, wherein a content of boron is 0.10 to 5.00 atom%.

6. The lithium ion conductive solid electrolyte according to any one of claims 2 to 5, wherein a content of tantalum is 10.00 to 17.00 atom%.

7. The lithium ion conductive solid electrolyte according to any one of claims 2 to 6, wherein a content of phosphorus is 5.00 to 8.50 atom%.

8. The lithium ion conductive solid electrolyte according to any one of claims 2 to 7, wherein a content of lithium is 5.00 to 20.00 atom%.

9. The lithium ion conductive solid electrolyte according to any one of claims 2 to 8, further comprising niobium, wherein a content of niobium is 0.10 to 5.00 atom%.

10. The lithium ion conductive solid electrolyte according to any one of claims 1 to 9, wherein a content ratio of the monoclinic crystal is 70.0% or more.

11. The lithium ion conductive solid electrolyte according to any one of claims 1 to 10, further comprising silicon, wherein an upper limit of a content of silicon is 0.15 atom%.

12. The lithium ion conductive solid electrolyte according to any one of claims 2 to 11, wherein boron is present at a crystal grain boundary.

13. An all-solid-state battery, comprising:
a positive electrode containing a positive electrode active material;
a negative electrode containing a negative electrode active material; and
a solid electrolyte layer between the positive electrode and the negative electrode, wherein
the solid electrolyte layer comprises the lithium ion conductive solid electrolyte according to any one of claims 1 to 12.

14. The all-solid-state battery according to claim 13, wherein the positive electrode active material comprises one or more compounds selected from the group consisting of LiM3PO₄, where M3 is one or more elements selected from the group consisting of Mn, Co, Ni, Fe, Al, Ti, and V, or two elements V and O; LiM5VO₄, where M5 is one or more elements selected from the group consisting of Fe, Mn, Co, Ni, Al, and Ti; Li₂M6P₂O₇, where M6 is one or more elements selected from the group consisting of Fe, Mn, Co, Ni, Al, Ti, and V, or two elements V and O; LiVP₂O₇, Liₓ₇V_{y7}M7_{z7}, where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr; Li₁₊ₓ₈Alₓ₈M8₂₋ₓ₈(PO₂)₃, where 0 ≤ x8 ≤ 0.8, and M8 is one or more elements selected from the group consisting of Ti and Ge; LiNi_{1/3}Co_{1/3}Mn_{1/3}O₂; LiCoO₂; LiNiO₂; LiMn₂O₄; Li₂CoP₂O₇; Li₃V₂(PO₄)₃; Li₃Fe₂(PO₄)₃; LiNi_{0.5}Mn_{1.5}O₄; and Li₄Ti₅O₁₂.

15. The all-solid-state battery according to claim 13 or 14, wherein the negative electrode active material comprises one or more compounds selected from the group consisting of LiM3PO₄, where M3 is one or more elements selected from the group consisting of Mn, Co, Ni, Fe, Al, Ti, and V, or two elements V and O; LiM5VO₄, where M5 is one or more elements selected from the group consisting of Fe, Mn, Co, Ni, Al and Ti; Li₂M6P₂O₇, where M6 is one or more elements selected from the group consisting of Fe, Mn, Co, Ni, Al, Ti, and V, or two elements V and O; LiVP₂O₇, Liₓ₇V_{y7}M7_{z7}, where 2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr; Li₁₊ₓ₈Alₓ₈M8₂₋ₓ₈(PO₄)₃, where 0 ≤ x8 ≤ 0.8, and M8 is one or more elements selected from the group consisting of Ti and Ge; (Li_{3-a9x9+(5-b9)y9}M9ₓ₉)(V_{1-y9}M10_{y9})O₄, where M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10; LiNb₂O₇; Li₄Ti₅O₁₂; Li₄Ti₅PO₁₂; TiO₂; LiSi; and graphite.

16. The all-solid-state battery according to any one of claims 13 to 15, wherein the positive electrode and the negative electrode comprise the lithium ion conductive solid electrolyte according to any one of claims 1 to 12.
